(19) Europäisches Patentamt
European Patent Office
Office européen des brevets

(11) EP 1 008 615 B1

(12) # EUROPÄISCHE PATENTSCHRIFT

(45) Veröffentlichungstag und Bekanntmachung des Hinweises auf die Patenterteilung:
**13.06.2001 Patentblatt 2001/24**

(51) Int Cl.[7]: **C08G 77/50**, C08G 77/48, C08L 83/14, C09D 183/14

(21) Anmeldenummer: **99120932.1**

(22) Anmeldetag: **02.11.1999**

(54) **Alkenylgruppen aufweisende Siloxancopolymere**

Alkenyl group containing siloxane copolymers

Copolymères polysiloxanes contenant des groupes alkényle

(84) Benannte Vertragsstaaten:
**BE DE FR GB**

(30) Priorität: **04.12.1998 DE 19856115**

(43) Veröffentlichungstag der Anmeldung:
**14.06.2000 Patentblatt 2000/24**

(73) Patentinhaber: **Wacker-Chemie GmbH**
**81737 München (DE)**

(72) Erfinder: **Herzig, Christian, Dr.**
**83329 Waging am See (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**EP-A- 0 523 660**
**EP-A- 0 534 206**
**WO-A-93/22368**
**DE-A- 19 522 144**
**DE-A- 19 701 393**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft Alkenylgruppen aufweisende Siloxancopolymere sowie ein Verfahren zu deren Herstellung. Weiterhin betrifft die Erfindung vernetzbare Zusammensetzungen, die Alkenylgruppen aufweisendes Siloxancopolymer, Si-gebundene Wasserstoffatome aufweisendes .Organopolysiloxan und Katalysator enthalten, sowie die Verwendung der Zusammensetzungen zur Herstellung von klebrige Stoffe abweisenden Überzügen.

In US-A 5,241,034 sind Alkenylgruppen aufweisende Siloxancopolymere beschrieben, die durch Umsetzung von einer organischen Verbindung mit zwei, drei oder vier endständigen aliphatischen Doppelbindungen mit Organopolysiloxan mit Si-gebundenen Wasserstoffatomen in Gegenwart eines Hydrosilylierungskatalysators hergestellt werden. Es werden dabei Copolymere erhalten, worin die Organopolysiloxanblöcke über Kohlenwasserstoffbrücken verbunden sind.

Nach DE 4123423 werden verzweigte Alkenylsiloxanpolymere hergestellt, die mindestens zwei Alkenylgruppen tragen. Die zur Polyaddition eingesetzten Siloxane (letzte Stufe) haben maximal zwei endständige SiH-Gruppen, während die erfindungsgemäßen Vorstufen aufgrund ihrer Verzweigung mehr als zwei tragen.

Die Alkenylsiloxane nach DE 196 466 42 erhalten ihre Verzweigung durch equilibrierte T-Einheiten der allg. Struktur R $SiO_{3/2}$.

Die verzweigten Vinylsiloxane nach DE 195 484 74 enthalten T-Einheiten der Form $O_{1/2}R_2SiYRSiO$.

In DE 195 221 44 sind verzweigte SiH-Vorstufen mit Siloxansegmenten von maximal 6 Si-Atomen beschrieben, die mit einem Überschuß an $\alpha,\omega$-Dien umgesetzt werden, welches keine Siloxaneinheiten enthält.

Die in DE 196 290 53 beanspruchten Polymere enthalten die ungesättigten Endgruppen an Siloxoansegmenten, die direkt an die organische Verzweigungseinheit gebunden sind. Das Herstellungsverfahren beinhaltet komplizierte hydrolytische Schritte und die Verwendung von Halogensilanen.

DE 196 270 22 beschreibt Polymere, die keine organischen Verzweigungseinheiten, sondern übliche Siloxystrukturen als $RSiO_{3/2}$ bzw. $SiO_{4/2}$ enthalten.

Es bestand daher die Aufgabe, Alkenylgruppen aufweisende Siloxancopolymere bereitzustellen, die in einem einfachen Verfahren hergestellt werden können, das die Umsetzung der Ausgangskomponenten bei niedrigen Temperaturen, möglichst mit nur geringer oder gar keiner externen Erwärmung in kurzer Zeit ermöglicht. Weiterhin sollten die Syntheseprodukte mit Si-gebundene Wasserstoffatome aufweisenden Organopolysiloxanen in Gegenwart von die Anlagerung von Si-gebundenem Wasserstoff an. aliphatische Doppelbindung förderndem Katalysator rasch vernetzen. Es bestand zudem die Aufgabe, Alkenylgruppen aufweisende Siloxancopolymere bereitzustellen, die mehr als zwei terminale Alkenylgruppen pro Molekül gleicher Reaktivität jeweils am Ende einer Siloxankette aufweisen, und deren Synthese auch ohne die Equilibrierung von T-Einheiten oder/und Q-Einheiten der Formeln $RSiO_{3/2}$ bzw. $SiO_{4/2}$ ausgeführt werden kann, insbesondere ohne teuere $\alpha,\omega$-Diene. Weiterhin bestand die Aufgabe, vernetzbare Zusammensetzungen bereitsustellen, die zur Herstellung von klebrige Stoffe abweisenden Überzügen geeignet sind. Die Aufgabe wird durch die Erfindung gelöst.

Gegenstand der Erfindung sind Alkenylgruppen aufweisende Siloxancopolymere herstellbar indem in einem ersten Schritt eine mindestens drei aliphatische Doppelbindungen aufweisende Verbindung (1) der allgemeinen Formel

$$R^2(CR^3=CH_2)_x$$

wobei

- $R^2$ einen dreiwertigen oder vierwertigen Kohlenwasserstoffrest mit vorzugsweise 1 bis 25 Kohlenstoffatomen je Rest,
- $R^3$ ein Wasserstoffatom oder einen Alkylrest mit vorzugsweise 1 bis 6 Kohlenstoffatomen je Rest und
- x 3 oder 4, bedeutet,

mit einem Organosiloxan (2) mit: endständigen Si-gebundenen Wasserstoffatomen
in Gegenwart von die Anlagerung von Si-gebundenem Wasserstoff an aliphatische Doppelbindung förderndem Katalysator (3) umgesetzt wird,
wobei das eingesetzte Verhältnis von Si-gebundenem Wasserstoff im Organosiloxan (2) zu aliphatischer Doppelbindung in organischer Verbindung (1) 1,3 bis 10, vorzugsweise 1,5 bis 5 beträgt,
in einem zweiten Schritt
die so erhaltenen, Si-gebundene Wasserstoffatome aufweisenden Kohlenwasserstoff-Siloxancopolymere
mit $\alpha,\omega$-Dialkenylsiloxanpolymer (4)
in Gegenwart von die Anlagerung von Si-gebundenem Wasserstoff an aliphatische Doppelbindung förderndem Katalysator (3) umgesetzt werden,

wobei das eingesetzte Verhältnis von aliphatischer Doppelbindung im α,ω- Dialkenylsiloxanpolymer (4) zu Si-gebundenem Wasserstoff in den Siloxancopolymeren 1,2 bis 10 vorzugsweise 1,5 bis 10 beträgt,
und gegebenenfalls in einem dritten Schritt
die so erhaltenen Alkenylgruppen aufweisenden Siloxancopolymere mit Organopolysiloxan (5),
ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, verzweigten, gegebenenfalls Hydroxylgruppen aufweisenden Organopolysiloxanen, cyclischen Organopolysiloxanen und Mischpolymerisaten aus Diorganosiloxan- und Monoorganosiloxaneinheiten, equilibriert werden.

Gegenstand der Erfindung ist weiterhin ein Verfahren zur Herstellung der Alkenylgruppen aufweisenden Siloxancopolymere, dadurch gekennzeichnet, daß
in einem ersten Schritt
eine mindestens drei aliphatische Doppelbindungen aufweisende Verbindung (1) der allgemeinen Formel

$$R^2(CR^3=CH_2)_x$$

wobei

- $R^2$ einen dreiwertigen oder vierwertigen Kohlenwasserstoffrest mit vorzugsweise 1 bis 25 Kohlenstoffatomen je Rest oder einen dreiwertigen oder vierwertigen Silanrest,
- $R^3$ ein Wasserstoffatom oder einen Alkylrest mit vorzugsweise 1 bis 6 Kohlenstoffatomen je Rest und
- x 3 oder 4, bedeutet,

mit einem Organosiloxan (2) mit endständigen Si-gebundenen Wasserstoffatomen
in Gegenwart von die Anlagerung von Si-gebundenem Wasserstoff an aliphatische Doppelbindung förderndem Katalysator (3) umgesetzt wird,
wobei das eingesetzte Verhältnis von Si-gebundenem Wasserstoff im Organosiloxan (2) zu aliphatischer Doppelbindung in organischer Verbindung (1) 1,3 bis 10, vorzugsweise 1,5 bis 5 beträgt,
in einem zweiten Schritt
die so erhaltenen, Si-gebundene Wasserstoffatome aufweisenden Kohlenwasserstoff-Siloxancopolymere
mit α,ω-Dialkenylsiloxanpolymer (4)
in Gegenwart von die Anlagerung von Si-gebundenem Wasserstoff an aliphatische Doppelbindung förderndem Katalysator (3) umgesetzt werden,
wobei das eingesetzte Verhältnis von aliphatischer Doppelbindung im α,ω-Dialkenylsiloxanpolymer (4) zu Si-gebundenem Wasserstoff in den Siloxancopolymeren 1,2 bis 10, vorzugsweise 1,5 bis 10 beträgt,
und gegebenenfalls in einem dritten Schritt
die so erhaltenen Alkenylgruppen aufweisenden. Siloxancopolymere mit Organopolysiloxan (5),
ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, verzweigten, gegebenenfalls Hydroxylgruppen aufweisenden Organopolysiloxanen, cyclischen Organopolysiloxanen und Mischpolymerisaten aus Diorganosiloxan- und Monoorganosiloxaneinheiten, equilibriert werden.

In den erfindungsgemäßen, Alkenylgruppen aufweisenden Siloxancopolymeren sind die Siloxanblöcke vorzugsweise über Kohlenwasserstoffbrücken miteinander verbunden, woraus eine Kohlenwasserstoff-Siloxan-Blockstruktur resultiert. Die Struktur von Alkenylgruppen aufweisenden Siloxancopolymeren ist in der eingangs zitierten US-A 5,241,034 beschrieben.
Die erfindungsgemäßen, Alkenylgruppen aufweisenden Siloxancopolymere besitzen vorzugsweise eine Viskosität von 0,05 bis 500000 Pa·s bei 25°C, bevorzugt 0,1 bis 100000 Pa·s bei 25°C, besonders bevorzugt 0,2 bis 10000 Pa·s bei 25°C.

Eine bevorzugte Ausführung ist die Herstellung der erfindungsgemäßen Siloxancopolymere in Lösungsmitteln, bevorzugt Kohlenwasserstoffen mit einem Siedepunkt vorzugsweise unter 150°C in einer Konzentration von vorzugsweise 20-60 Gew.% Siloxangehalt, wobei höhere oder niedrigere Konzentrationen im Bereich vorliegender Erfindung mit eingeschlossen sind.

Das im ersten Verfahrensschritt eingesetzte Organosiloxan (2) enthält vorzugsweise zwei Si-gebundene Wasserstoffatome je Molekül.

Im ersten Verfahrensschritt kann eine Art von Organosiloxanen (2) oder verschiedene Arten von Organosiloxan (2) eingesetzt werden.

Als Organosiloxan (2) wird im ersten Verfahrensschritt vorzugsweise solches der allgemeinen Formel

$$HR_2SiO(SiR_2O)_nSiR_2H,$$

wobei

R vorzugsweise gleiche oder verschiedene, gegebenenfalls halogenierte. Kohlenwasserstoffreste mit vorzugsweise 1 bis 6 Kohlenstoffatomen je Rest und
n vorzugsweise 0 oder eine ganze Zahl, besonders bevorzugt eine ganze Zahl von 7 bis 2000 bedeutet, wobei alle ganzen Zahlen zwischen 0 und 2000 als explizit genannt zu gelten haben,

verwendet.
Im ersten Verfahrensschritt kann eine Art von Verbindung (1) oder verschiedene Arten von Verbindung (1) eingesetzt werden.
Als Verbindung (1) wird im ersten Verfahrensschritt bevorzugt solches eingesetzt, bei der $R^2$ ein dreiwertiger Kohlenwasserstoffrest mit vorzugsweise 1 bis 25 Kohlenstoffatomen je Rest und x einen Wert von 3 bedeutet.
Als α,ω-Dialkenylsiloxanpolymer (4) wird im zweiten Verfahrensschritt vorzugsweise solches der allgemeinen Formel

$$R^4{}_aR_{3-a}SiO(R_2Si-R^1-SiR_2O)_m(R_2SiO)_kSiR^4{}_aR_{3-a}$$

wobei

R die oben dafür angegebene Bedeutung hat,
$R^1$ einen zweiwertigen Kohlenwasserstoffrest, bevorzugt einen Alkylenrest, mit vorzugsweise 2 bis 10 Kohlenstoffatomen je Rest bedeutet oder einen zweiwertigen Silan- oder Siloxanrest, vorzugsweise mit vorzugsweise 2 bis 10 Si-Einheiten,
$R^4$ ein endständig olefinisch ungesättigter Rest mit 2 bis 10 C-Atomen ist,
a gleich oder verschieden 0 oder 1, durchschnittlich 0,7 bis 1,0 ist,
m gleich 0 oder eine ganze Zahl von vorzugsweise 1 bis 10 ist,
und k gleich 0 oder eine ganze Zahl von vorzugsweise 1 bis 1000 ist

verwendet.
Es kann im zweiten Verfahrensschritt eine Art von α,ω-Dialkenylsiloxanpolymer (4) oder verschiedene Arten von α,ω-Dialkenylsiloxanpolymer (4) eingesetzt werden.
Beispiele für Reste R sind vorzugsweise Alkylreste, wie der Methyl-, Ethyl-, n-Propyl-, iso-Propyl-, 1-n-Butyl-, 2-n-Butyl-, iso-Butyl-, tert.-Butylrest. Bevorzugt ist der Methylrest.
Beispiele für halogenierte Reste R sind Halogenalkylreste; wie vorugsweise der 3,3,3-Trifluor-n-propylrest, der 2,2,2,2',2',2'-Hexafluorisopropylrest, der Heptafluorisopropylrest.
Beispiele für Alkylreste $R^3$ sind vorugsweise der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest und Hexylreste, wie der n-Hexylrest. Bevorzugt ist $R^3$ ein Wasserstoffatom.
Beispiele für Verbindung (1), mit denen die erfindungsgemäßen Alkenylgruppen aufweisenden Siloxancopolymere herstellbar sind, sind

1,2,4-Trivinylcyclohexan,
1,3,5-Trivinylcyclohexan,
3,5-Dimethyl-4-vinyl-1,6-heptadien,
1,2,3,4-Teiravinylcyclobutan,
Methyltrivinylsilan,
Tetravinylsilan,

wobei 1,2,4-Trivinylcyclohexan bevorzugt ist.
Beispiele für den Rest $R^2$ sind daher vorzugsweise solche der Formel

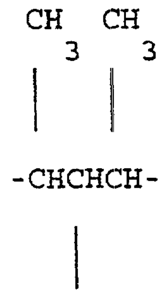

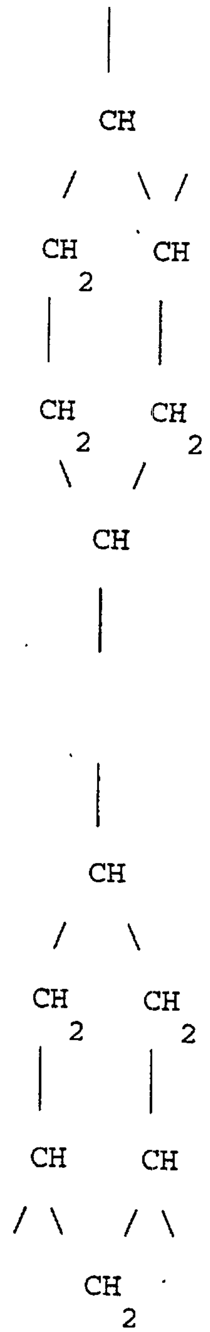

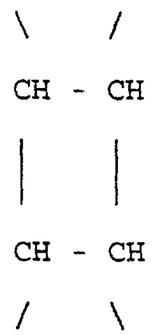

wobei der Rest der Formel

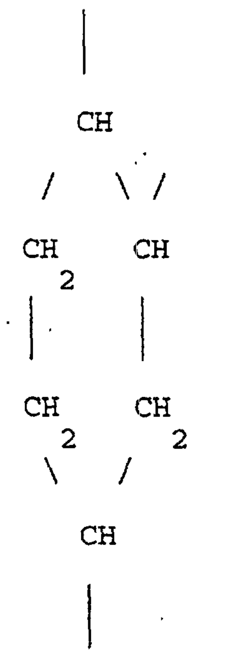

bevorzugt ist.

Beispiele für α,ω-Dialkenylsiloxanpolymer (4), mit denen die erfindungsgemäßen Alkenylgruppen aufweisenden Siloxancopolymere herstellbar sind, sind

α,ω-Divinylpolydimethylsiloxan,
α,ω-Diallylpolydimethylsiloxan,
α,ω-Dihexenylpolydimethylsiloxan,
α,ω-Dioctenylpolydimethylsiloxan,

sowie Polyadditionsprodukte aus Organosiloxan (2) und Dienen wie

1,5-Hexadien,
1,7-Octadien,
1,.9-Decadien,
1,11-Dodecadien,
1,13-Tetradecadien,
3,5-Dimethyl-1,6-heptadien,
1,3-Divinylbenzol,

1,4-Divinylbenzol, 1,3-Diisopropenylbenzol, Divinyldimethylsilan,
1,3-Divinyl-1,1,3,3-tetramethyldisiloxan,

wobei α,ω - Divinylpolydimethylsiloxane und α,ω-Dihexenylpolydimethylsiloxane bevorzugt sind.

Die erfindungsgemäßen α,ω-Dialkenylsiloxanpolymere haben - je nach Zielprodukt - bevorzugt durchschnittliche Molekulargewichte von 186 bis ca. 30 000 Dalton, wobei der Bereich von 1 000 bis 15 000 Dalton besonders bevorzugt ist.

Beispiele für den Rest $R^1$ sind daher vorzugsweise solche der Formel

$$-(CH_2)_2-$$

$$-(CH_2)_4-$$

$$-(CH_2)_6-$$

$$-(CH_2)_8-$$

$$-(CH_2)_{10}-,$$

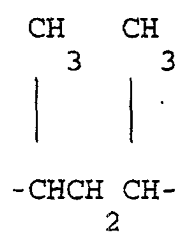

und

$$-C_6H_4-,$$

wobei der Rest der Formel

$$-(CH_2)_2-$$

bevorzugt ist.

Organosiloxan (2) wird im ersten Verfahrensschritt in solchen Mengen eingesetzt, daß das Verhältnis von Si-gebundenem Wasserstoff in Organosiloxan (2) zu aliphatischer Doppelbindung in Verbindung (1) 1,3 bis 10, bevorzugt 1,5 bis 4,0, besonders bevorzugt 1,8 bis 3,0 beträgt.

Da Organosiloxan (2) im Überschuß eingesetzt wird, reagieren daher in dem ersten Verfahrensschritt vorzugsweise alle aliphatische Doppelbindungen in der Verbindung (1) ab, und es werden Siloxancopolymere erhalten, die Si-gebundene Wasserstoffatome aufweisen.

Der erste Verfahrensschritt, die Umsetzung von Verbindung (1), wie 1,2,4 Trivinylcyclohexan, mit Organosiloxan (2), wie 1,3-Dihydrogen-1,1,3,3-tetramethyldisiloxan, im Überschuß in Gegenwart von Katalysator (3) kann durch folgendes Reaktionsschema (1) dargestellt werden:

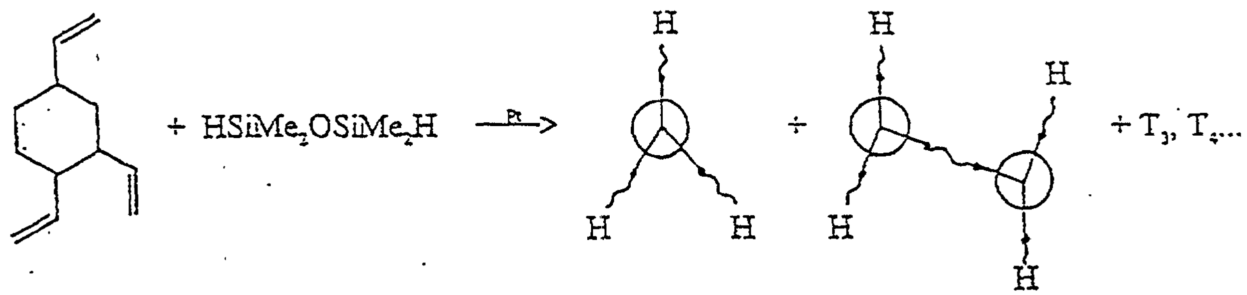

$T_1$ $T_2$

Die erhaltene Siloxancopolymermischung enthält dabei einen Anteil von vorzugsweise über 50% von individuellen Verbindungen $T_1$ und $T_2$, der Rest sind höher verzweigte Polymere $T_3$, $T_4$ etc.

Je nach dem stöchiometrischen Verhältnis H-Si/C=C enthält die Siloxancopolymermischung wechselnde Mengen an Organosiloxan (2), welches bei niedrigen Molekulargewichten im Vacuum entfernt werden kann, ansonsten als Komponente mit aktivem Wasserstoff in der Produktmischung verbleibt.

Als die Anlagerung von Si-gebundenem Wasserstoff an aliphatische Doppelbindung fördernde Katalysatoren (3) können auch bei dem erfindungsgemäßen Verfahren die gleichen Katalysatoren eingesetzt werden, die auch bisher zur Förderung der Anlagerung von Si-gebundenem Wasserstoff an aliphatische Doppelbindung eingesetzt werden konnten. Bei den Katalysatoren (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6*6H_2O$, $Na_2PtCl_4*4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6*6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid, Cyclooctadien-Platindichlorid, Norbornadien-Platindichlorid, Gamma-picolin-Platindichlorid, Cyclopentadien-Platindichlorid.

Der Katalysator (3) wird im ersten Verfahrensschritt vorzugsweise in Mengen von 0,5 bis 100 Gew.-ppm (Gewichtsteilen je Million Gewichtsteilen), bevorzugt in Mengen von 2 bis 10 Gew.-ppm, jeweils berechnet als elementares Platin und bezogen auf das Gesamtgewicht von Verbindung (1) und Organosiloxan (2) verwendet.

Der erste Verfahrensschritt wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der erste Verfahrensschritt vorzugsweise bei einer Temperatur von 20°C bis 150°C, bevorzugt 20°C bis 120°C, besonders bevorzugt 20°C bis 100°C durchgeführt.

Da die mindestens drei aliphatische Doppelbindungen aufweisende Verbindung (1), z. B. 1,2,4-Trivinylcyclohexan, bei höheren Temperaturen zur Polymerisation neigt, können bei dem ersten Verfahrensschritt vorugsweise Radikalinhibitoren, wie 4-Methoxyphenol, 2,6-Bis(tert.butyl)-4-methylphenol, Phenothiazin, Hydrochinon oder Brenzcatechin mitverwendet werden. Die Radikalinhibitoren werden dabei vorzugsweise in Mengen von 10 bis 500 Gew.-ppm, bezogen auf das Gesamtgewicht an Verbindung (1) und Organosiloxan (2), eingesetzt.

In dem ersten wie auch im zweiten Verfahrensschritt können vorzugsweise inerte, organische Lösungsmittel mitverwendet werden. Beispiele für inerte, organische Lösungsmittel sind Toluol, Xylol, Octanisomere, Heptanisomere, Butylacetat, 1,2-Dimethoxyethan, Tetrahydrofuran und Cyclohexan.

Die gegebenenfalls mitverwendeten inerten organischen Lösungsmittel können nach dem ersten bzw. zweiten Verfahrensschritt destillativ entfernt werden oder im Reaktionsgemisch verbleiben.

$\alpha,\omega$-Dialkenylsiloxanpolymer (4) wird in dem zweiten Verfahrensschritt in solchen Mengen eingesetzt, daß das Verhältnis von aliphatischer Doppelbindung in $\alpha,\omega$-Dialkenylsiloxanpolymer (4) zu Si-gebundenem Wasserstoff in dem im ersten Schritt erhaltenen Kohlenwasserstoff-Siloxancopolymer 1,2 bis 10, bevorzugt 1,5 bis 5,0, besonders bevorzugt 1,5 bis 3,0 beträgt.

Da $\alpha,\omega$-Dialkenylsiloxanpolymer (4) im Überschuß eingesetzt wird, reagieren daher in dem zweiten Verfahrensschritt vorzugsweise alle Si-gebundenen Wasserstoffatome von den im ersten Verfahrensschritt erhaltenen Kohlenwasserstoff-Siloxancopolymeren ab und es werden Alkenylgruppen aufweisende Siloxancopolymere erhalten.

Der Katalysator (3) wird im zweiten Verfahrensschritt vorzugsweise in Mengen von 0,5 bis 100 Gew.-ppm (Gewichtsteilen je Million Gewichtsteilen), bevorzugt in Mengen von 2 bis 10Gew.-ppm, jeweils berechnet als elementares Platin und bezogen auf das Gesamtgewicht von α,ω-Dialkenylsiloxanpolymer (4) und die im ersten Verfahrensschritt erhaltenen Si-gebundene Wasserstoffatome aufweisenden Kohlenwasserstoff-Siloxancopolymere, verwendet.

Der zweite Verfahrensschritt wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der zweite Verfahrensschritt vorzugsweise bei einer Temperatur von 20°C bis 150°C, bevorzugt 20°C bis 120°C, durchgeführt.

Die im zweiten Verfahrensschritt erhaltenen Alkenylgruppen aufweisenden Siloxancopolymere können in einem dritten Verfahrensschritt mit Organopolysiloxan (5) equilibriert werden.

Der ggf. dritte Verfahrensschritt, die Equilibrierung, vergrößert die durchschnittlichen Kettenlängen der verwendeten Komponenten (2) und (4).

Auch im dritten Verfahrensschritt werden höher verzweigte Siloxancopolymere erhalten. Bei der Equilibrierung ist die Bildung von Cyclen ohne funktionelle Gruppen, die dem Fachmann bekannt ist und die in Mengen von 8 bis 15 Gew.-% vorliegen, unvermeidbar,.aber nicht störend. Falls gewünscht, können deren flüchtige Anteile (Cyclen mit 3-9 Si-Atomen) durch Vakuum und höhere Temperaturen aus dem Produktgemisch entfernt werden. Ebenso wie die Cyclen können bei der Equilibrierung andere nicht erwünschte aber nicht störende Nebenprodukte in kleinen Mengen erhalten werden.

Als Organopolysiloxane (5) werden vorzugsweise solche ausgewählt aus der Gruppe bestehend aus vorzugsweise linearen, endständige Triorganosiloxygruppen aufweisenden Organopolysiloxanen der Formel

$$R_3SiO(SiR_2O)_rSiR_3 ,$$

wobei

R die oben dafür angegebene Bedeutung hat und
r 0 oder eine ganze Zahl im Wert von vorugsweise 1 bis 1500, bevorzugt 10 bis 300, ist,

linearen, endständige Hydroxylgruppen aufweisenden Organopolysiloxanen der Formel

$$HO(SiR_2O)_sH,$$

wobei

R die oben dafür angegebene Bedeutung hat und
s eine ganze Zahl im Wert von vorzugsweise 1 bis 1500, bevorzugt 10 bis 300, ist,

verzweigten, gegebenenfalls Hydroxylgruppen aufweisenden Organopolysiloxanen aus Einheiten der Formel

$$R_3SiO_{1/2}, R_2SiO \text{ und } RSiO_{3/2},$$

wobei R die oben dafür angegebene Bedeutung hat, cyclischen Organopolysiloxanen der Formel

$$(R_2SiO)_t ,$$

wobei

R die oben dafür angegebene Bedeutung hat und
t eine ganze Zahl von 3 bis 12 ist,

und Mischpolymerisaten aus Einheiten der Formel

$$R_2SiO \text{ und } RSiO_{3/2} ,$$

wobei R die oben dafür angegebene Bedeutung hat, eingesetzt.

Bevorzugte Organopolysiloxane (5) sind vorzugsweise die der Formeln $R_3SiO(SiR_2O)_rSiR_3$, $HO(SiR_2O)_sH$ und $(R_2SiO)_t$, wobei diejenigen der Formel $R_3SiO(SiR_2O)_rSiR_3$ besonders bevorzugt sind.

Das Mengenverhältnis der bei der gegebenenfalls durchgeführten Equilibrierung eingesetzten Organopolysiloxane (5) und Alkenylgruppen aufweisenden Siloxancopolymere wird lediglich durch den gewünschten Anteil der Alkenylgruppen in den bei der gegebenenfalls durchgeführten Equilibrierung erzeugten Siloxancopolymeren und durch die gewünschte mittlere Kettenlänge bestimmt.

Bei dem gegebenenfalls durchgeführten Equilibrieren werden vorzugsweise basische oder saure Katalysatoren, welche die Equilibrierung fördern, eingesetzt. Beispiele für solche Katalysatoren sind vorzugsweise Alkalihydroxide, wie Natriumhydroxid, Kaliumhydroxid, und Cäsiumhydroxid, Trimethylbenzylammoniumhydroxid und Tetramethylammoniumhydroxid. Bevorzugt' sind Alkalihydroxide. Alkalihydroxide werden vorzugsweise in Mengen von 50 bis 10 000 Gew.-ppm (= Teile je Million), insbesondere 500 bis 2 000 Gew.-ppm, jeweils bezogen auf das Gesamtgewicht der eingesetzten Alkenylgruppen aufweisenden Siloxancopolymere und eingesetzten Organopolysiloxane (5), verwendet.

Beispiele für saure Katalysatoren sind vorzugsweise Schwefelsäure, Phosphorsäure, Trifluormethansäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride. Phosphornitridchloride werden vorzugsweise in Mengen von 5 bis 1000 Gew.-ppm (=Teile je Million), insbesondere 50 bis 200 Gew.-ppm, jeweils bezogen auf das Gesamtgewicht der eingesetzten Organosiliciumverbindungen, verwendet.

Die gegebenenfalls durchgeführte Equilibrierung wird vorzugsweise bei 100°C bis 150°C und beim Druck der umgebenden Atmosphäre, also etwa bei 1020 hPa (abs.) durchgeführt. Falls erwünscht, können aber auch höhere oder niedrigere Drücke angewendet werden. Das Equilibrieren wird vorzugsweise in 5 bis 20 Gew.-%, bezogen auf das Gesamtgewicht der jeweils eingesetzten Alkenylgruppen aufweisenden Siloxancopolymere und eingesetzten Organopolysiloxane (5), in mit Wasser nichtmischbarem Lösungsmittel, wie Toluol, durchgeführt. Vor dem Aufarbeiten des bei dem Equilibrieren erhaltenen Gemisches kann der Katalysator unwirksam gemacht werden.

Das erfindungsgemäße Verfahren kann absatzweise, halbkontinuierlich oder vollkontinuierlich durchgeführt werden.

Alternativ zur beschriebenen Abfolge der Verfahrensschritte zur Herstellung von Alkenylgruppen aufweisenden Kohlenwasserstoff-Siloxancopolymeren kann, falls gewünscht, eine Erhöhung des durchschnittlichen Molekulargewichts bzw. eine Kettenverlängerung der im 1. Verfahrensschritt erhaltenen Aktivwasserstoff enthaltenden Kohlenwasserstoff-Siloxancopolymeren durch Equilibrierung auch direkt daran im Anschluß in einem 2. Verfahrensschritt erfolgen. Es werden hierfür die selben Organopolysiloxane (5) eingesetzt und unter den dort beschriebenen Bedingungen zur Reaktion gebracht. Bevorzugte Organopolysiloxane (5) sind die der Formeln $R_3SiO(SiR_2O)_rSiR_3$, HO $(SiR_2O)_sH$ und $(R_2SiO)_t$, wobei diejenigen der Formel $R_3SiO(SiR_2O)_rSiR_3$ besonders bevorzugt sind und R dieselbe Bedeutung wie oben hat.

Bei dieser alternativen Abfolge der Verfahrensschritte werden dann in einem 3. Verfahrensschritt die durch Equilibrierung erhaltenen Aktivwasserstoff aufweisenden Kohlenwasserstof-f-Siloxancopolymere mit $\alpha,\omega$-Dialkenylsiloxanpolymer (4) umgesetzt, wobei dieses bevorzugt in Mengen eingesetzt wird, daß das Verhältnis von aliphatischer Doppelbindung in (4) zu Si-gebundenem Wasserstoff in zuvor erhaltenem Copolymer vorzugsweise 1,5-5,0, besonders bevorzugt 1,5-3,0 beträgt.

Bei dieser alternativen Abfolge der Verfahrensschritte sind somit lediglich die eingangs beschriebenen Schritte in ihrer Reihenfolge vertauscht, so daß Verfahrensschritt 3 vor dem Verfahrensschritt 2 ausgeführt wird.

Die erfindungsgemäßen, Alkenylgruppen aufweisenden Siloxancopolymere können vorzugsweise mit Si-gebundenen Wasserstoff aufweisenden Organopolysiloxanen in Gegenwart von Hydrosilylierungskatalysatoren vernetzt werden. Weiterhin können die erfindungsgemäßen, Alkenylgruppen aufweisenden Siloxancopolymere auch mit Mercaptogruppen aufweisenden organischen Polymeren vernetzt werden.

Die erfindungsgemäßen, Alkenylgruppen aufweisenden Siloxancopolymere werden vorzugsweise in vernetzbaren Zusammensetzungen, die

(A) Alkenylgruppen aufweisende Siloxancopolymere,
(B) Si-gebundene Wasserstoffatome aufweisende Organopolysiloxane und
(C) die Anlagerung von Si-gebundenem Wasserstoff an aliphatische Doppelbindung förderndem Katalysatoren sowie gegebenenfalls vorzugsweise Inhibitor (D)enthalten, verwendet.

Die erfindungsgemäßen Zusammensetzunegen können auch vorzugsweise Lösungsmittel enthalten, wie bevorzugte Kohlenwasserstoffen mit einem Siedepunkt vorzugsweise unter 150°C in einer Konzentration von vorzugsweise 20-60 Gew.% Siloxangehalt, wobei höhere oder niedrigere Konzentrationen im Bereich vorliegender Erfindung mit eingeschlossen sind.

Die die erfindungsgemäßen Siloxancopolymere enthaltenden vernetzbaren Zusammensetzungen werden vorzugsweise zur Herstellung von klebrige Stoffe abweisenden Überzügen, z. B. zur Herstellung von Trennpapieren, verwendet.

Die Herstellung der mit dem Trennpapier verbundenen Selbstklebematerialien erfolgt nach dem off-line Verfahren oder dem in-line Verfahren. Beim off-line Verfahren wird die Siliconzusammensetzung auf das Papier aufgetragen und vernetzt, dann, in einer darauffolgenden Stufe, gewöhnlich nach dem Aufwickeln des Trennpapiers auf eine Rolle und nach dem Lagern, der Rolle, wird ein Klebstoffilm, der beispielsweise auf einem Etikettenfacepapier aufliegt, auf das beschichtete Papier aufgetragen und der Verbund wird dann zusammengepreßt. Beim in-line Verfahren wird die Siliconzusammensetzung auf das Papier aufgetragen und vernetzt, der Siliconüberzug wird mit dem Klebstoff beschichtet, das Etikettenfacepapier wird dann auf den Klebstoff aufgetragen und der Verbund schließlich zusammengepreßt.

Bei den erfindungsgemäßen Zusammensetzungen kann vorzugsweise eine Art von Siloxancopolymer (A) oder verschiedene Arten von Siloxancopolymer (A) eingesetzt werden.

Als Bestandteil (B) können auch bei den erfindungsgemäßen Zusammensetzungen die gleichen Si-gebundene Wasserstoffatome aufweisenden Organopolysiloxane verwendet werden, die bei allen bisher bekannten Zusammensetzungen aus Vinylgruppen aufweisendem Organopolysiloxan, Si-gebundene Wasserstoffatome aufweisendem Organopolysiloxan und die Anlagerung von Si-gebundenem Wasserstoff an aliphatische Doppelbindung förderndem Katalysator eingesetzt werden konnten.

Vorzugsweise enthalten die Organopolysiloxane (B) mindestens 3 Si-gebundene Wasserstoffatome.

Als Bestandteil (B) werden vorzugsweise Organopolysiloxane aus Einheiten der Formel

$$H_eR_fSiO_{\frac{4-(e+f)}{2}}$$

wobei

R die oben dafür angegebene Bedeutung hat,
e 0 oder 1,
f 0, 1, 2 oder 3 und
die Summe e+f nicht größer als 3 ist,

bevorzugt solche der Formel

$$H_gR_{3-g}SiO(SiR_2O)_k(SiRHO)_lSiR_{3-g}H_g$$

wobei

R die oben dafür angegebene Bedeutung hat,
g 0 oder 1
k 0 oder eine ganze Zahl von vorzugsweise 1 bis 100 und
l 0 oder eine ganze Zahl von vorzugsweise 1 bis 100 ist, verwendet.

Beispiele für Organopolysiloxane (B) sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogen-siloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Weitere bevorzugte Ausführungen des Bestandteils (B) sind Polymere mit Si-gebundenem Wasserstoff, wie beschrieben in den Anmeldungen EP 786 463 Seite 5, Zeile 32 ff. (Wa 9546-S/9637-S) unter "$B^1$" bzw. in der eingereichten Anmeldung P 197 551 51 Seite 4, Zeile32 ff. (Wa 9760-S). Besonders bevorzugte Ausführungen für die dort definierten Spacer "G" sind die Reste:

$1,3-(-CH_2CH_2)C_6H_4(CH_2CH_2-)$,
$1,4-(-CH_2CH_2)C_6H_4(CH_2CH_2-)$,
$1,3-(-CH_2CH\ CH_3)C_6H_4(CH\ CH_3CH_2-)$,
$1,2,4-(-CH_2CH_2)_3C_6H_9$ und
$1,3,5-(-CH_2CH_2)_3C_6H_9$.

Verfahren zum Herstellen von Organopolysiloxanen (B), auch von solchen Organopolysiloxanen (B) der bevorzugten Art, sind allgemein bekannt'oder in den genannten Publikationen beschrieben.

Organopolysiloxan (B) wird vorzugsweise in Mengen von 0,5 bis 6, bevorzugt 1 bis 3, besonders bevorzugt 1,5 bis 2,5 Grammatom Si-gebundenen Wasserstoffs je Mol Alkenylgruppe-$CR^3$=$CH_2$ in den Alkenylgruppen aufweisenden Siloxancopolymeren (A) eingesetzt, wobei R die oben angegebene Bedeutung hat.

Als die Anlagerung von Si-gebundenem Wasserstoff an aliphatische Doppelbindung förderndem Katalysator (C) können auch bei den erfindungsgemäßen Zusammensetzungen die gleichen Katalysatoren verwendet werden, die auch bei den bisher bekannten Zusammensetzungen zum Vernetzen von aliphatische Doppelbindungen enthaltenden Organopolysiloxanen mit Verbindungen, die Si-gebundenen Wasserstoff enthalten, zur Förderung der Vernetzung eingesetzt werden konnten. Als Bestandteil (C) werden vorzugsweise die oben genannten Katalysatoren (3) verwendet.

Katalysator (C) wird vorzugsweise in Mengen von 5 bis 500 Gewichts-ppm (Gewichtsteilen je Million Gewichtsteilen), insbesondere 10 bis 200 Gewichts-ppm, jeweils berechnet als elementares Platinmetall und bezogen auf das Gesamtgewicht des Siloxancopolymers (A) und Organopolysiloxans (B) eingesetzt. Beispiele für weitere Bestandteile, die bei den erfindungsgemäßen Zusammensetzungen mitverwendet werden können, sind die Anlagerung von Si-gebundenem Wasserstoff an aliphatische Doppelbindung bei Raumtemperatur verzögernde Mittel, sogenannte Inhibitoren (D), Mittel zur Einstellung der Trennkraft, Lösungsmittel, Haftvermittler und Pigmente.

Als Inhibitoren (D) können auch bei den erfindungsgemäßen Zusammensetzungen alle Inhibitoren verwendet werden, die auch bisher für den gleichen Zweck verwendet werden konnten. Beispiele für Inhibitoren sind vorzugsweise 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung gemäß US-A 3,445,420, wie 1-Ethinylcyclohexan-1-ol, 2-Methyl-3-butin-2-ol, 3-Methyl-1-pentin-3-ol, 2,5-Dimethyl-3-hexin-2,5-diol 3,5-Dimethyl-1-hexin-3-ol und 3,7-Dimethyl-oct-1-in-6-en-3-ol Inhibitoren gemäß US-A 2,476,166, wie eine Mischung aus Diallylmaleinat und Vinylacetat, und Inhibitoren gemäß US 4,504,645, wie Maleinsäuremonoester.

Vorzugsweise wird der Inhibitor (D) in Mengen von vorzugsweise 0,001 bis 10 Gew.-%, bezogen auf das Gesamtgewicht der Siloxancopolymere (A) und Organopolysiloxane (B), eingesetzt, besonders bevorzugt aber 0,1 bis 0,5 Gew.-%.

Beispiele für Mittel zur Einstellung der Trennkraft der mit den erfindungsgemäßen Zusammensetzungen hergestellten klebrige Stoffe abweisenden Überzüge sind Siliconharze aus Einheiten der Formel

$$R^4(CH_3)_2SiO_{1/2} \text{ und } SiO_2,$$

sogenannte MQ-Harze, wobei $R^4$ ein Wasserstoffatom, ein Methylrest, ein Vinylrest oder ein Rest A, der in der eingangs zitierten US-A 5,241,034 in Spalte 2, Zeile 24 ff. beschrieben ist und daher zum Inhalt der Offenbarung der Anmeldung gehört, ist, und die Einheiten der Formel $R^4(CH_3)_2SiO_{1/2}$ gleich oder verschieden sein können. Das Verhältnis von Einheiten der Formel $R^4(CH_3)_2SiO_{1/2}$ zu Einheiten der Formel $SiO_2$ beträgt vorzugsweise 0,6 bis 2. Die Siliconharze werden vorzugsweise in Mengen von 5 bis 80 Gew.-%, bezogen auf das Gesamtgewicht der Siloxancopolymere (A) und Organopolysiloxane (B), eingesetzt.

Die bei den erfindungsgemäßen Zusammensetzungen gegebenenfalls mitverwendeten Lösungsmittel können die gleichen Lösungsmittel sein, die bei den bisher bekannten Zusammensetzungen aus Si-gebundene Vinylgruppen aufweisenden Organopolysiloxanen, Si-gebundenen Wasserstoff aufweisenden Organopolysiloxanen und die Anlagerung von Si-gebundenem Wasserstoff an aliphatische Doppelbindung förderndem Katalysator verwendet werden konnten. Beispiele für solche Lösungsmittel sind vorzugsweise Benzine, z. B. Alkangemische mit einem Siedebereich von vorugsweise 80°C bis 110°C bei 1012 mbar (abs.), n-Heptan, Benzol, Toluol und Xylole, halogenierte Alkane mit 1 bis 6 Kohlenstoffatomen, wie Methylenchlorid, Trichlorethylen und Perchlorethylen, Ether, wie Di-n-butylether, Ester, wie Ethylacetat, und Ketone, wie Methylethylketon und Cyclohexanon.

Werden organische Lösungsmittel mitverwendet, so werden sie zweckmäßig in Mengen von vorzugsweise 10 bis 95 Gew.-%, bezogen auf das Gewicht der Alkenylgruppen aufweisenden Siloxancopolymere (A), eingesetzt, bevorzugt 40 bis 70 Gew.-%.

Die Reihenfolge beim Vermischen der Bestandteile (A), (B), (C) und gegebenenfalls (D) ist zwar nicht entscheidend, für die Praxis hat es sich jedoch bewährt, den Bestandteil (C), also den Katalysator, dem Gemisch der anderen Bestandteile zuletzt zuzusetzen.

Die Vernetzung der erfindungsgemäßen Zusammensetzungen erfolgt vorzugsweise bei 50°C bis 150°C. Ein Vorteil bei den erfindungsgemäßen Zusammensetzungen ist, daß eine rasche Vernetzung schon bei niedrigen Temperaturen erzielt wird. Als Energiequellen für die Vernetzung durch Erwärmen werden vorzugsweise Öfen, z. B. Umlufttrockenschränke, Heizkanäle, beheizte Walzen, beheizte Platten oder Wärmestrahlen des Infrarotbereiches verwendet.

Die erfindungsgemäßen Zusammensetzungen können außer durch Erwärmen auch durch Bestrahlen mit Ultraviolettlicht oder durch Bestrahlen mit UV- und IR-Licht vernetzt werden. Als Ultraviolettlicht wird üblicherweise solches mit einer Wellenlänge von vorzugsweise 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Das Auftragen von den erfindungsgemäßen Zusammensetzungen auf die klebrige Stoffe abweisend zu machenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Bei den klebrige Stoffe abweisend zu machenden Oberflächen, die im Rahmen der Erfindung behandelt werden können, kann es sich um Oberflächen beliebiger bei Raumtemperatur und 1012 mbar (abs.) fester Stoffe handeln. Beispiele für derartige Oberflächen sind diejenigen von vorzugsweise Papier, Holz, Kork und Kunststoffolien, z. B. Polyethylenfolien, Polyesterfolien oder Polypropylenfolien, gewebtem und ungewebtem Tuch aus natürlichen oder synthetischen Fasern oder Glasfasern, keramischen Gegenständen, Glas, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von vorzugsweise .60 bis 150 g/$m^2$, ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunststoff, Holz oder Eisen, das bzw. die für Lagerung und/oder Transport von klebrigen Gütern, wie Klebstoffen, klebrigen Lebensmitteln, z. B. Kuchen, Honig, Bonbons und Fleisch, Bitumen, Asphalt, gefetteten Materialien und Rohgummi, bestimmt ist bzw. sind. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die erfindungsgemäßen Zusammensetzungen eignen sich zur Herstellung der mit dem Trennpapier verbundenen Selbstklebematerialien sowohl nach dem off-line Verfahren als auch nach dem in-line Verfahren.

**Beispiel 1**

a) 20,0 g 1,2,4-Trivinylcyclohexan werden mit 423,3 g eines $\alpha,\omega$-Dihydrogenpolydimethylsiloxans mit einem Gehalt an Aktivwasserstoff von 0,224% H homogen gemischt. Bei Raumtemperatur (23°C) gibt man 1,0 mg Platin in Form einer Lösung von Karstedt-Katalysator in Vinylsiloxan zu. Es setzt eine exotherme Reaktion ein, die in wenigen Minuten beendet ist. Man erhält ein klares Polyadditionsprodukt mit einer Viskosität von 262 $mm^2$/s (25°C) und einer Jodzahl von 33,2.

1 kg-Produkt enthält 1,30 g Si-gebundenen Wasserstoff. Im 1H-NMR-Spektrum können keine C=C-Doppelbindungen mehr nachgewiesen werden (Umsatz > .99,8%).

b) In der 2. Stufe werden 71,8 g dieser Vorstufe mit 280,6 g eines α,ω-Divinylpolydimethylsiloxans mit durchschnittlichem Molekulargewicht von 2 670 g gemischt und mit 3,5 mg Pt als Karstedt-Katalysatorlösung gestartet. Unter kräftigem Rühren steigt die Innentemperatur des Reaktionsgefäßes von 22 auf 37°C. Nach einer gesamten Reaktionsdauer von 3 Stunden ist ein Umsatz von mehr als 99,8% erreicht. Das Polyadditionsprodukt hat eine Viskosität von 280 $mm^2/s$ (25°C) bei einer Jodzahl von 8,6. Somit enthält 1 kg Produkt: 0,34 mequ. Vinylgruppen.

**Beispiel 2**

Das Vorprodukt aus Beispiel la kann auch zur Herstellung eines hochviskosen Vinylpolymers verwendet werden: 2,4 g dieses Vorproduktes mit einer Jodzahl von 33,2 werden mit 114,3 g eines α,ω-Divinyl-polydimethylsiloxan der durchschnittlichen Kettenlänge von 635 Siloxyeinheiten homogenisiert, mit 391 g Toluol verdünnt, mit Karstedt-Katalysatorlösung (1,2 mg Pt) gestartet. Während des Rührens bei Raumtemperatur erfolgt starke Viskositätserhöhung. Nach ca. 2,5 Stunden ist die Endviskosität von 420 $mm^2/s$ erreicht, die sich auch bei einer Lagerung von über 4 Wochen nicht verändert. 1 kg der Lösung enthält 7,9 mequ. Vinylgruppen.

**Beispiel 3**

a) In ähnlicher Weise wie in Beispiel la wird ein SiH-funktionelles Vorprodukt aus 26,3 g Trivinylcylohexan und 530,4 g des dort verwendeten α,ω-Dihydrogenpolydimethylsiloxans hergestellt.

b) 13,5 g dieses Polymers mit der Viskosität von 28,3 $mm^2/s$ (25°C), welches weniger als 0,2 Mol-% der eingesetzten C=C-Doppelbindungen enthalten kann, werden mit 183,8 g eines linearen α,ω-Divinyl-polydimethylsiloxan der durchschnittlichen Kettenlänge $Si_{170}$ und 161,5 g Toluol homogen vermischt.

Bei Raumtemperatur werden 2,0 mg Pt als Karstedt-Katalysatorlösung in das Vinylpolymer zugegeben. Nach 2-stündigem Rühren ohne externe Heizung erreicht die Viskosität der Lösung 800 $mm^2/s$ und hat ein Vinylgehalt von 38 mequ./kg.

**Beispiel 4**

Es werden dieselben Polymere wie in Beispiel 3b gemischt, aber das Einsatzverhältnis geändert: 10,0 g SiH-funktionelles Vorprodukt werden mit 111,0 g Vinylpolymer und 282,3 g Toluol homogen vermischt und mit 60% des dort verwendeten Katalysators aktiviert (10 mg Pt/kg Siloxan). Nach 3 Stunden bei Raumtemperatur hat die Polymerlösung eine Viskosität von 3 400 $mm^2/s$ erreicht und weist eine Vinylgruppenkonzentration von ca. 13 mequ./kg auf.

**Beispiel 5**

a) Aus 706,1 g 1,1,3,3-Tetramethyldisiloxan werden durch Zudosieren von insgesamt 162,9 g 1,2,4-Trivinylcyclohexan unter Pt-Katalyse niedermolekulare Polyadditionsprodukte hergestellt. Die Reaktortemperatur steigt während des Dosierens über 2 Stunden von 23°C bis auf Rückflußtemperatur. Zur vollständigen Umsetzung hält man den Ansatz weitere 2 Stunden lang bei ca. 90°C und destilliert anschließend unumgesetztes Disiloxan aus. Das Produkt hat eine Viskosität von 47,6 $mm^2/s$ und enthält 4,305 g Si-gebundenen Wasserstoff pro kg.

b) Nacheinander werden nun 8,5 g dieses Vorproduktes und 7,5 g des in Beispiel la verwendeten α,ω-Dihydrogenpolydimethylsiloxan zugegeben zu einer Lösung aus 300,0 g des in Beispiel 2 eingesetzten α,ω-Divinyl-polydimethylsiloxan des Polymerisationsgrads 635 in 700 g Toluol. Bei Raumtemperatur wird mit 3 mg Pt in Form der Karstedt-Katalysatorlösung gestartet. In 3 Stunden wird Viskositätskonstanz bei 355 $mm^2/s$ erreicht. Ein stark vergrößertes H-NMR-Spektrum läßt keinen restlichen Si-gebundenen Wasserstoff mehr erkennen. Die klare, farblose Polymerlösung hat einen Vinylgruppengehalt von 7,5 mequ./kg.

**Beispiel 6**

Das in Beispiel 5a hergestellte Polyadditionsprodukt der Viskosität von 47,6 $mm^2/s$ wird in einer Menge von 3,3 g mit 2,8 g des in Beispiel la verwendeten $\alpha,\omega$-Dihydrogenpolydimethylsiloxan und 161,3 g $\alpha,\omega$-Divinylpolydimethylsiloxan mit einem Polymerisationsgrad von 118 sowie 167,4 g Toluol homogen vermischt. Nach Zumischung von 1,6 mg Platin als Karstedt-Katalysatorlösung bei 23°C wird ohne externe Erwärmung 3 Stunden lang gerührt. Der Ansatz erreicht 1090 $mm^2/s$ und enthält nach Reaktion aller SiH-Gruppen ca. 52 mequ. Vinylfunktionen pro kg.

**Beispiel 7**

In Vergleichsversuchen wird das Polymer aus Beispiel 6 mit einem kommerziellen Vinylpolymer der Viskosität von 6000 $mm^2/s$ (30%ig), welches ausschließlich laterale Vinylgruppen (ca. 105 ViMeSiO/Molekül) hat, in jeweils optimierten Formulierungen verglichen.

| Einzelbestandteile | erfindungsgemäß | Vergleich |
|---|---|---|
| Polymerlösung | 10.000 g (50%ig) | 16.667 g (30%ig) |
| Inhibitor | 12 g | 12 g |
| Vernetzer | 173 g | 267 g |
| Toluol | 39.765 g | 39.671.g |
| Katalysator | 50 g | 50 g |
| Viskosität (4mm-Becher) | 13,0" | 33,5" |

Als Inhibitor wurde Methylbutinol eingesetzt.

Der Vernetzer ist ein Copolymerisat, das Hydrogendimethylsiloxy-, Hydrogenmethylsiloxy-, Dimethylsiloxy- und Trimethylsiloxygruppen enthält. Die Viskosität liegt bei 94 $mm^2/s$, der Gehalt an Si-gebundenem Wasserstoff bei 0,6 Gew.-%.

Als Katalysator wurde der Karstedt-Katalysator, gelöst in $\alpha,\omega$-Divinyl-polydimethylsiloxan verwendet; die Pt-Konzentration beträgt 1 Gew.-%, in der Formulierung daher 100 ppm auf Polymer.

Die 10%ige Lösung in Toluol wird mit einem Raster-Walzenauftragswerk auf Glassinepapier (80g/$m^2$) appliziert und bei 180°C Umlufttemperatur im Trockenschrank gehärtet. Die Vulkanisationsqualität wird bei steigenden Bahngeschwindigkeiten anhand des Migrationstests (1 = keine Migration bis 6 = starke Migration) und der noch extrahierbaren Anteile aus dem Vulkanisat (% der Beschichtung) beurteilt.

| **Alter der Formulierung: ca ½ Stunde** | | | | |
|---|---|---|---|---|
| **Bahngeschwindigkeit** | **Migration** | | **Extrawert** | |
| | erfingungsgemäß | Vergleich | erfindungsgemäß | Vergleich |
| 50 m/min | 1 | 1 | 6,8 | 7,3 |
| 100 | 1 | 1 | | |
| 200 | 1 | 3 | 9,8 | 11,1 |
| 300 | 2 | 5 | 10,9 | 18,3 |

| **Alter der Formulierung: ca. 18 Stunden** | | | | |
|---|---|---|---|---|
| **Bahngeschwindigkeit** | **Migration** | | **Extrawert** | |
| | erfindungsgemäß | Vergleich | erfindungsgemäß | Vergleich |
| 50 m/min | 1 | 2 | 2,9 | 8,3 |
| 100 | 1 | 2 | 5,0 | 10,0 |
| 150 | 1 | schmierig | | - |

(fortgesetzt)

| Alter der Formulierung: ca. 18 Stunden | | | | |
|---|---|---|---|---|
| Bahngeschwindigkeit | Migration | | Extrawert | |
| | erfindungsgemäß | Vergleich | erfindungsgemäß | Vergleich |
| 200 | 1 | - | 6,0 | - |
| 250 | 4 | - | 8,9 | - |
| 300 | schmierig | - | - | - |

Die erfindungsgemäße Formulierung kann bei vergleichbarer Vulkanisationsqualität bedeutend schneller verarbeitet werden als Standardware. Sie ist außerdem erheblich stabiler gegenüber Aktivitätsabfall durch Alterung.

## Patentansprüche

**1.** Alkenylgruppen aufweisende Siloxancopolymere herstellbar indem in einem ersten Schritt eine mindestens drei aliphatische Doppelbindungen aufweisende Verbindung (1) der allgemeinen Formel

$$R^2(CR^3{=}CH_2)_x$$

wobei

$R^2$ einen dreiwertigen oder vierwertigen Kohlenwasserstoffrest mit 1 bis 25 Kohlenstoffatomen je Rest oder einen dreiwertigen oder vierwertigen Silanrest,
$R^3$ ein Wasserstoffatom oder einen Alkylrest
x 3 oder 4, bedeutet,

mit einem Organosiloxan (2) mit endständigen Si-gebundenen Wasserstoffatomen in Gegenwart von die Anlagerung von Si-gebundenem Wasserstoff an aliphatische Doppelbindung förderndem Katalysator (3) umgesetzt wird wobei das eingesetzte Verhältnis von Si-gebundenem Wasserstoff im Organosiloxan (2) zu aliphatischer Doppelbindung in organischer Verbindung (1) 1,3 bis 10 beträgt, in einem zweiten Schritt die so erhaltenen, Si-gebundene Wasserstoffatome aufweisenden Kohlenwasserstoff-Siloxancopolymere mit $\alpha,\omega$-Dialkenylsiloxanpolymer (4) in Gegenwart von die Anlagerung von Si-gebundenem Wasserstoff an aliphatische Doppelbindung förderndem Katalysator (3) umgesetzt werden wobei das eingesetzte Verhältnis von aliphatischer Doppelbindung im $\alpha,\omega$-Dialkenylsiloxanpolymer (4) zu Si-gebundenem Wasserstoff im Kohlenwasserstoff-Siloxancopolymer 1,2 bis 10 beträgt, und gegebenenfalls in einem dritten Schritt die so erhaltenen Alkenylgruppen aufweisenden Siloxancopolymere mit Organopolysiloxan (5), ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, verzweigten, gegebenenfalls Hydroxylgruppen aufweisenden Organopolysiloxanen, cyclischen Organopolysiloxanen und Mischpolymerisaten aus Diorganosiloxan- und Monoorganosiloxaneinheiten, equilibriert werden.

**2.** Alkenylgruppen aufweisende Siloxancopolymere nach Anspruch 1, dadurch gekennzeichnet daß als Organosiloxan (2) solches der allgemeinen Formel

$$HR_2SiO(SiR_2O)_nSiR_2H,$$

wobei

R gleiche oder verschiedene, gegebenenfalls halogenierte Kohlenwasserstoffreste mit 1 bis 6 Kohlenstoffatomen je Rest und
n oder eine ganze Zahl bedeutet,

verwendet wird.

**3.** Alkenylgruppen aufweisende Siloxancopolymere nach Anspruch 1 oder 2, dadurch gekennzeichnet, daß als organische Verbindung (1) solche verwendet: wird, bei der $R^2$ einen dreiwertigen Kohlenwasserstoffrest mit 1 bis 25 Kohlenstoffatomen je Rest und x den Wert 3 bedeutet.

**4.** Alkenylgruppen aufweisende Siloxancopolymere nach Anspruch 1, 2 oder 3, dadurch gekennzeichnet, daß als organische Verbindung (1) 1,2,4-Trivinylcyclohexan verwendet wird.

**5.** Alkenylgruppen aufweisende Siloxancopolymere nach einem der Ansprüche 1 bis 4, dadurch gekennzeichnet, daß als α,ω-Dialkenylsiloxanpolymer (4) solches der allgemeinen Formel

$$R^4{}_aR_{3-a}SiO(R_2Si\text{-}R^1\text{-}SiR_2O)_m(R_2SiO)_kSiR^4{}_aR_{3-a}$$

wobei

R die oben angegebene Bedeutung hat
$R^1$ einen Alkylenrest mit 2 bis 10 Kohlenstoffatomen je Rest oder einen zweiwertigen Silan-oder Siloxanrest,
$R^4$ ein endständig olefinisch ungesättigter Rest mit 2 bis 10 C-Atomen ist, und
a gleich oder verschieden 0 oder 1, durchschnittlich 0,7 bis 1,0 ist,
m gleich 0 oder eine ganze Zahl von 1 bis 10 ist,
k gleich 0 oder eine ganze Zahl von 1 bis 1000 ist, verwendet wird.

**6.** Alkenylgruppen aufweisende Siloxancopolymere nach einem der Ansprüche 1 bis 5, dadurch gekennzeichnet, daß als α,ω-Dialkenylsiloxanpolymer (4) α,ω-Divinylpolydimethylsiloxane verwendet werden.

**7.** Alkenylgruppen aufweisende Siloxancopolymere nach einem der Ansprüche 1 bis 6, dadurch gekennzeichnet, daß in einem dritten Schritt mit einem Organopolysiloxan (5), bevorzugt einem linearen, endständige Triorganosiloxygruppen aufweisendem Organopolysiloxan der allgemeinen Formel

$$R_3SiO(SiR_2O)_rSiR_3,$$

wobei

R gleiche oder verschiedene, gegebenenfalls halogenierte Kohlenwasserstoffreste mit 1 bis 6 Kohlenstoffatomen je Rest und
r 0 oder eine ganze Zahl im Wert von 1 bis 1500, bevorzugt 10 bis 300, bedeutet,

equilibriert wird.

**8.** Verfahren zur Herstellung der Alkenylgruppen aufweisenden Siloxancopolymere nach einem der Ansprüche 1 bis 7, dadurch gekennzeichnet, daß
in einem ersten Schritt
eine mindestens drei aliphatische Doppelbindungen aufweisende Verbindung (1) der allgemeinen Formel

$$R^2(CR^3{=}CH_2)_x$$

wobei

$R^2$ einen dreiwertigen oder vierwertigen Kohlenwasserstoffrest mit 1 bis 25 Kohlenstoffatomen je Rest oder einen dreiwertigen oder vierwertigen Silanrest,

$R^3$ ein Wasserstoffatom oder einen Alkylrest mit 1 bis 6 Kohlenstoffatomen je Rest und
x 3 oder 4, bedeutet,

mit einem Organosiloxan (2) mit endständigen Si-gebundenen Wasserstoffatomen
in Gegenwart von die Anlagerung von Si-gebundenem Wasserstoff an aliphatische Doppelbindung förderndem Katalysator (3) umgesetzt wird
wobei das eingesetzte Verhältnis von Si-gebundenem Wasserstoff im Organosiloxan (2) zu aliphatischer Doppelbindung in organischer Verbindung (1) 1,3 bis 10 beträgt,
in einem zweiten Schritt
die so erhaltenen, Si-gebundene Wasserstoffatome aufweisenden Kohlenwasserstoff-Siloxancopolymere
mit $\alpha,\omega$-Dialkenylsiloxanpolymer (4)
in Gegenwart von die Anlagerung von Si-gebundenem Wasserstoff an aliphatische Doppelbindung förderndem Katalysator (3) umgesetzt werden
wobei das eingesetzte Verhältnis von aliphatischer Doppelbindung im $\alpha,\omega$-Dienalkenylsiloxanpolymer (4) zu Si-gebundenem Wasserstoff im Kohlenwasserstoff-Siloxancopolymer 1,2 bis 10 beträgt,
und gegebenenfalls in einem dritten Schritt
die so erhaltenen Alkenylgruppen aufweisenden Siloxancopolymere mit Organopolysiloxan (5),
ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, verzweigten, gegebenenfalls Hydroxylgruppen aufweisenden Organopolysiloxanen, cyclischen Organopolysiloxanen und Mischpolymerisaten aus Diorganosiloxan- und Monoorganosiloxaneinheiten, equilibriert werden.

**9.** Verfahren nach Anspruch 8, dadurch gekennzeichnet, daß das Verfahren in einem organischen Lösungsmittel durchgeführt wird.

**10.** Vernetzbare Zusammensetzungen enthaltend

(A) Alkenylgruppen aufweisende Siloxancopolymere nach einem der Ansprüche 1 bis 7,

(B) mindestens 2 Si-gebundene Wasserstoffatome aufweisende Organopolysiloxane und

(C) die Anlagerung von Si-gebundenem Wasserstoff an aliphatische Doppelbindung fördernde Katalysatoren.

**11.** Vernetzbare Zusammensetzungen nach Anspruch 10, dadurch gekennzeichnet, daß
(D) Inhibitoren
enthalten sind.

**12.** Vernetzbare Zusammensetzungen nach Anspruch 10 oder 11,
dadurch gekennzeichnet, daß
(E) Lösungsmittel
enthalten ist.

**13.** Verwendung der Zusammensetzungen nach einem oder mehreren der Ansprüche 10 bis 12 zur Herstellung von klebrige Stoffe abweisenden Überzügen.

**14.** Si-gebundene Wasserstoffatome aufweisende Siloxancopolymere herstellbar indem
eine mindestens drei aliphatische Doppelbindungen aufweisende organische Verbindung (1) der allgemeinen Formel

$$R^2(CR^3{=}CH_2)_x$$

wobei

$R^2$ einen dreiwertigen oder vierwertigen Kohlenwasserstoffrest mit 1 bis 25 Kohlenstoffatomen je Rest oder einen dreiwertigen oder vierwertigen Silanrest,
$R^3$ ein Wasserstoffatom oder einen Alkylrest mit 1 bis 6 Kohlenstoffatomen je Rest und
x 3 oder 4, bedeutet,

mit einem Organosiloxan (2) mit endständigen Si-gebundenen Wasserstoffatomen in Gegenwart von die Anlagerung von Si-gebundenem Wasserstoff an aliphatische Doppelbindung förderndem Katalysator (3) umgesetzt wird wobei das eingesetzte Verhältnis von Si-gebundenem Wasserstoff im Organosiloxan (2) zu aliphatischer Doppelbindung in organischer Verbindung (1) 1,3 bis 10 beträgt.

**15.** Si-gebundene Wasserstoffatome aufweisende Siloxancopolymere nach Anspruch 14, dadurch gekennzeichnet, daß Organopolysiloxan (2) solches der allgemeinen Formel

$$HR_2SiO(SiR_2O)_nSiR_2H,$$

wobei

R gleiche oder verschiedene, gegebenenfalls halogenierte Kohlenwasserstoffreste mit 1 bis 6 Kohlenstoffatomen je Rest und
n 6 bis 2000 eine ganze Zahl bedeutet,

verwendet wird.

**16.** Si-gebundene Wasserstoffatome aufweisende Siloxancopolymere herstellbar indem in einem ersten Schritt eine mindestens drei aliphatische Doppelbindungen aufweisende organische Verbindung (1) der allgemeinen Formel

$$R^2(CR^3{=}CH_2)_x$$

wobei

$R^2$ einen dreiwertigen oder vierwertigen Kohlenwasserstoffrest mit 1 bis 25 Kohlenstoffatomen je Rest oder einen dreiwertigen oder vierwertigen Silanrest,
$R^3$ ein Wasserstoffatom oder einen Alkylrest mit 1 bis 6 Kohlenstoffatomen je Rest und
x 3 oder 4, bedeutet,

mit einem Organosiloxan (2) mit endständigen Si-gebundenen Wasserstoffatomen in Gegenwart von die Anlagerung von Si-gebundenem Wasserstoff an aliphatische Doppelbindung förderndem Katalysator (3) umgesetzt wird wobei das eingesetzte Verhältnis von Si-gebundenem Wasserstoff im Organosiloxan (2) zu aliphatischer Doppelbindung in organischer Verbindung (1) 1,3 bis 10 beträgt, und in einem zweiten Schritt die so erhaltenen Si-gebundene Wasserstoffatome aufweisenden Siloxancopolymere mit Organopolysiloxan (5), ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, verzweigten, gegebenenfalls Hydroxylgruppen aufweisenden Organopolysiloxanen, cyclischen Organopolysiloxanen und Mischpolymerisaten aus Diorganosiloxan- und Monoorganosiloxaneinheiten, equilibriert werden.

**17.** Verfahren zur Herstellung der Alkenylgruppen aufweisenden Siloxancopolymere nach einem der Ansprüche 1 bis 7, dadurch gekennzeichnet, daß in einem ersten Schritt eine mindestens drei aliphatische Doppelbindungen aufweisende organische Verbindung (1) der allgemeinen Formel

$$R^2(CR^3{=}CH_2)_x$$

wobei

$R^2$ einen dreiwertigen oder vierwertigen Kohlenwasserstoffrest mit 1 bis 25 Kohlenstoffatomen je Rest oder einen dreiwertigen oder vierwertigen Silanrest,
$R^3$ ein Wasserstoffatom oder einen Alkylrest mit 1 bis 6 Kohlenstoffatomen je Rest und
x 3 oder 4, bedeutet,

mit einem Organosiloxan (2) mit endständigen Si-gebundenen Wasserstoffatomen
in Gegenwart von die Anlagerung von Si-gebundenem Wasserstoff an aliphatische Doppelbindung förderndem Katalysator (3) umgesetzt wird
wobei das eingesetzte Verhältnis von Si-gebundenem Wasserstoff im Organosiloxan (2) zu aliphatischer Doppelbindung in organischer Verbindung (1) 1,3 bis 10 beträgt,
und in einem zweiten Schritt
die so erhaltenen Si-gebundene Wasserstoffatome aufweisenden .Siloxancopolymere mit Organopolysiloxan (5), ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, verzweigten, gegebenenfalls Hydroxylgruppen aufweisenden Organopolysiloxanen, cyclischen Organopolysiloxanen und Mischpolymerisaten aus Diorganosiloxan- und Monoorganosiloxaneinheiten, equilibriert werden,
und in einem dritten Schritt
die so erhaltenen, Si-gebundene Wasserstoffatome aufweisenden Kohlenwasserstoff-Siloxancopolymere
mit α,ω-Dialkenylsiloxanpolymer (4)
in Gegenwart von die Anlagerung von Si-gebundenem Wasserstoff an aliphatische Doppelbindung förderndem Katalysator (3) umgesetzt werden
wobei das eingesetzte Verhältnis von aliphatischer Doppelbindung im α,ω-Dialkenylsiloxanpolymer (4) zu Si-gebundenem Wasserstoff im Kohlenwasserstoff-Siloxancopolymer 1,2 bis 10 beträgt.

## Claims

1. Alkenyl-containing siloxane copolymers preparable by
in a first step reacting
a compound (1) having at least three aliphatic double bonds, of the general formula

$$R^2(CR^3{=}CH_2)_x$$

where

$R^2$ is a trivalent or tetravalent hydrocarbon radical having 1 to 25 carbon atoms per radical, or is a trivalent or tetravalent silane radical,
$R^3$ is a hydrogen atom or an alkyl radical, and
x is 3 or 4

with an organosiloxane (2) having terminal Si-bonded hydrogen atoms
in the presence of catalyst (3) which promotes the addition of Si-bonded hydrogen onto aliphatic double bond,
the ratio employed of Si-bonded hydrogen in the organosiloxane (2) to aliphatic double bond in organic compound (1) being from 1.3 to 10,
in a second step reacting the resulting hydrocarbon-siloxane copolymers containing Si-bonded hydrogen atoms with α,ω-dialkenylsiloxane polymer (4)
in the presence of catalyst (3) which promotes the addition of Si-bonded hydrogen onto aliphatic double bond,
the ratio employed of aliphatic double bond in the α,ω-dialkenylsiloxane polymer (4) to Si-bonded hydrogen in the hydrocarbon-siloxane copolymer being from 1.2 to 10,
and, if desired, in a third step equilibrating
the resulting alkenyl-containing siloxane copolymers with organopolysiloxane (5) selected from the group consisting of linear organopolysiloxanes containing terminal triorganosiloxy groups, linear organopolysiloxanes containing terminal hydroxyl groups, branched organopolysiloxanes with or without hydroxyl groups, cyclic organopolysiloxanes, and copolymers of diorganosiloxane units and monoorganosiloxane units.

2. Alkenyl-containing siloxane copolymers according to Claim 1, characterized in that the organosiloxane (2) used is of the general formula

$$HR_2SiO(SiR_2O)_nSiR_2H$$

where

R is identical or different, optionally halogenated hydrocarbon radicals having 1 to 6 carbon atoms per radical, and
n is 0 or an integer.

**3.** Alkenyl-containing siloxane copolymers according to Claim 1 or 2, characterized in that the organic compound (1) used is one in which $R^2$ is a trivalent hydrocarbon radical having 1 to 25 carbon atoms per radical, and x denotes the value 3.

**4.** Alkenyl-containing siloxane copolymers according to Claim 1, 2 or 3, characterized in that the organic compound (1) used is 1,2,4-trivinylcyclohexane.

**5.** Alkenyl-containing siloxane copolymers according to any of Claims 1 to 4, characterized in that the α,ω-dialkenylsiloxane polymer (4) used is of the general formula

$$R^4{}_aR_{3-a}SiO(R_2Si\text{-}R^1\text{-}SiR_2O)_m(R_2SiO)_kSiR^4{}_aR_{3-a}$$

where

R is as defined above,
$R^1$ is an alkylene radical, having 2 to 10 carbon atoms per radical or is a divalent silane or siloxane radical,
$R^4$ is a terminally olefinically unsaturated radical having 2 to 10 carbon atoms,
a is identical or different: and is 0 or 1, on average from 0.7 to 1.0,
m is 0 or an integer from 1 to 10, and
k is 0 or an integer from 1 to 1000.

**6.** Alkenyl-containing siloxane copolymers according to any of claims 1 to 5, characterized in that the α,ω-dialkenylsiloxane polymer (4) used comprises α,ω-divinylpolydimethylsiloxanes.

**7.** Alkenyl-containing siloxane copolymers according to any of Claims 1 to 6, characterized in that in a third step equilibration is carried out with an organopolysiloxane (5), preferably a linear organopolysiloxane containing terminal triorganosiloxy groups, of the general formula

$$R_3SiO(SiR_2O)_rSiR_3$$

where

R is identical or different, optionally halogenated hydrocarbon radicals having 1 to 6 carbon atoms per radical, and
r is 0 or an integer of from 1 to 1500, preferably from 10 to 300, in value.

**8.** Process for preparing alkenyl-containing siloxane copolymers according to any of Claims 1 to 7 characterized in that it comprises
in a first step reacting
a compound (1) having at least three aliphatic double bonds, of the general formula

$$R^2(CR^3=CH_2)_x$$

where

$R^2$ is a trivalent or tetravalent hydrocarbon radical having 1 to 25 carbon atoms per radical, or is a trivalent or

tetravalent silane radical,
$R^3$ is a hydrogen atom or an alkyl radical having 1 to 6 carbon atoms per radical, and
x is 3 or 4

with an organosiloxane (2) having terminal Si-bonded hydrogen atoms
in the presence of catalyst (3) which promotes the addition of Si-bonded hydrogen onto aliphatic double bond,
the ratio employed of Si-bonded hydrogen in the organosiloxane (2) to aliphatic double bond in organic compound (1) being from 1.3 to 10,
in a second step reacting the resulting hydrocarbon-siloxane copolymers containing Si-bonded hydrogen atoms with α,ω-dialkenylsiloxane polymer (4)
in the presence of catalyst (3) which promotes the addition of Si-bonded hydrogen onto aliphatic double bond,
the ratio employed of aliphatic double bond in the α,ω-dialkenylsiloxane polymer (4) to Si-bonded hydrogen in the hydrocarbon-siloxane copolymer being from 1.2 to 10,
and, if desired, in a third step equilibrating
the resulting alkenyl-containing siloxane copolymers with organopolysiloxane (5) selected from the group consisting of linear organopolysiloxanes containing terminal triorganosiloxy groups, linear organopolysiloxanes containing terminal hydroxyl groups, branched organopolysiloxanes with or without hydroxyl groups, cyclic organopolysiloxanes, and copolymers of diorganosiloxane units and monoorganosiloxane units.

**9.** Process according to Claim 8, characterized in that the process is conducted in an organic solvent.

**10.** Crosslinkable compositions comprising

(A) alkenyl-containing siloxane copolymers according to any of Claims 1 to 7,

(B) organopolysiloxanes containing at least 2 Si-bonded hydrogen atoms, and

(C) catalysts which promote the addition of Si-bonded hydrogen onto aliphatic double bonds.

**11.** Crosslinkable compositions according to Claim 10, characterized in that
(D) inhibitors
are included.

**12.** Crosslinkable compositions according to Claim 10 or 11, characterized in that
(E) solvents
are included.

**13.** The use of the compositions according to one or more of Claims 10 to 12 to produce coatings which repel tacky substances.

**14.** Siloxane copolymers containing Si-bonded hydrogen atoms, preparable by
reacting
an organic compound (1) having at least three aliphatic double bonds, of the general formula

$$R^2(CR^3{=}CH_2)_x$$

where

$R^2$ is a trivalent or tetravalent hydrocarbon radical having 1 to 25 carbon atoms per radical, or is a trivalent or tetravalent silane radical,
$R^3$ is a hydrogen atom or an alkyl radical having 1 to 6 carbon atoms per radical, and
x is 3 or 4

with an organosiloxane (2) having terminal Si-bonded hydrogen atoms
in the presence of catalyst (3) which promotes the addition of Si-bonded hydrogen onto aliphatic double bond,
the ratio employed of Si-bonded hydrogen in the organosiloxane (2) to aliphatic double bond in organic compound (1) being from 1.3 to 10.

**15.** Siloxane copolymers containing Si-bonded hydrogen atoms, according to Claim 14, characterized in that the organopolysiloxane (2) used is of the general formula

$$HR_2SiO(SiR_2O)_nSiR_2H$$

where

R is identical or different, optionally halogenated hydrocarbon radicals having 1 to 6 carbon atoms per radical, and
n is an integer from 6 to 2000.

**16.** Siloxane copolymers containing Si-bonded hydrogen atoms, preparable by
in a first step reacting
an organic compound (1) having at least three aliphatic double bonds, of the general formula

$$R^2(CR^3=CH_2)_x$$

where

$R^2$ is a trivalent or tetravalent hydrocarbon radical having 1 to 25 carbon atoms per radical, or is a trivalent or tetravalent silane radical,
$R^3$ is a hydrogen atom or an alkyl radical having 1 to 6 carbon atoms per radical, and
x is 3 or 4

with an organosiloxane (2) having terminal Si-bonded hydrogen atoms
in the presence of catalyst (3) which promotes the addition of Si-bonded hydrogen onto aliphatic double bond,
the ratio employed of Si-bonded hydrogen in the organosiloxane (2) to aliphatic double bond in organic compound (1) being from 1.3 to 10,
and in a second step equilibrating
the resulting siloxane copolymers containing Si-bonded hydrogen atoms with organopolysiloxane (5) selected from the group consisting of linear organopolysiloxanes containing terminal triorganosiloxy groups, linear organopolysiloxanes containing terminal hydroxyl groups, branched organopolysiloxanes with or without hydroxyl groups, cyclic organopolysiloxanes, and copolymers of diorganosiloxane units and monoorganosiloxane units.

**17.** Process for preparing alkenyl-containing siloxane copolymers according to any of Claims 1 to 7 characterized in that it comprises
in a first step reacting
an organic compound (1) having at least three aliphatic double bonds, of the general formula

$$R^2(CR^3=CH_2)_x$$

where

$R^2$ is a trivalent or tetravalent hydrocarbon radical having 1 to 25 carbon atoms per radical, or is a trivalent or tetravalent silane radical,
$R^3$ is a hydrogen atom or an alkyl radical having 1 to 6 carbon atoms per radical, and
x is 3 or 4

with an organosiloxane (2) having terminal Si-bonded hydrogen atoms
in the presence of catalyst (3) which promotes the addition of Si-bonded hydrogen onto aliphatic double bond,
the ratio employed of Si-bonded hydrogen in the organosiloxane (2) to aliphatic double bond in organic compound (1) being from 1.3 to 10,
and in a second step equilibrating
the resulting siloxane copolymers containing Si-bonded hydrogen atoms with organopolysiloxane (5) selected from the group consisting of linear organopolysiloxanes containing terminal triorganosiloxy groups, linear organopolysiloxanes containing terminal hydroxyl groups, branched organopolysiloxanes with or without hydroxyl groups, cyclic organopolysiloxanes, and copolymers of diorganosiloxane units and monoorganosiloxane units
and in a third step reacting the resulting hydrocarbon-siloxane copolymers containing Si-bonded hydrogen atoms with α,ω-dialkenylsiloxane polymer (4)
in the presence of catalyst (3) which promotes the addition of Si-bonded hydrogen onto aliphatic double bond, the ratio employed of aliphatic double bond in the α,ω-dialkenylsiloxane polymer (4) to Si-bonded hydrogen in the hydrogen-siloxane copolymer being from 1.2 to 10.

## Revendications

1. Copolymères de siloxane présentant des groupements alcényle, pouvant être préparés en transformant, dans une première étape, un composé (1) présentant au moins trois doubles liaisons aliphatiques de formule générale

$$R^2(CR^3{=}CH_2)_x$$

$R^2$ signifiant un radical hydrocarboné trivalent ou quadrivalent comprenant 1 à 25 atomes de carbone par radical ou un radical silane trivalent ou quadrivalent,
$R^3$ signifiant un atome d'hydrogène ou un radical alkyle,
x signifiant 3 ou 4,

avec un organosiloxane (2) présentant des atomes d'hydrogène liés par Si en position terminale, en présence d'un catalyseur (3) favorisant la fixation d'hydrogène lié par Si sur une double liaison aliphatique,
le rapport utilisé d'hydrogène lié par Si dans l'organosiloxane (2) à double liaison aliphatique dans le composé organique (1) étant de 1,3 à 10,
en transformant dans une deuxième étape les copolymères d'hydrocarbure et de siloxane présentant des atomes d'hydrogène liés par Si ainsi obtenus avec un polymère de α,ω-dialcénylsiloxane (4) en présence d'un catalyseur (3) favorisant la fixation d'hydrogène lié par Si sur une double liaison aliphatique,
le rapport utilisé de double liaison aliphatique dans le polymère de α,ω-dialcénylsiloxane (4) à hydrogène lié par Si dans le copolymère d'hydrocarbure et de siloxane étant de 1,2 à 10,
et en équilibrant, le cas échéant, dans une troisième étape, les copolymères de siloxane présentant des groupements alcényle ainsi obtenus avec un organopolysiloxane (5) choisi parmi le groupe constitué d'organopolysiloxanes linéaires présentant des groupements triorganosiloxy en position terminale, d'organopolysiloxanes linéaires présentant des groupements hydroxyle en position terminale, d'organopolysiloxanes ramifiés présentant le cas échéant des groupements hydroxyle, d'organopolysiloxanes cycliques et de copolymères constitués d'unités diorganosiloxane et monoorganosiloxane.

2. Copolymères de siloxane présentant des groupements alcényle selon la revendication 1, caractérisés en ce qu'on utilise comme organosiloxane (2) un organosiloxane de formule générale

$$HR_2SiO(SiR_2O)_nSiR_2H$$

R signifiant des radicaux hydrocarbonés identiques ou différents, le cas échéant halogénés, comprenant 1 à 6 atomes de carbone par radical et
n signifiant 0 ou un nombre entier.

3. Copolymères de siloxane présentant des groupements alcényle selon les revendications 1 ou 2, caractérisés en ce qu'on utilise comme composé organique (1) un composé dans lequel $R^2$ signifie un radical hydrocarboné trivalent comprenant 1 à 25 atomes de carbone par radical et x signifie la valeur 3.

4. Copolymères de siloxane présentant des groupements alcényle selon les revendications 1, 2 ou 3, caractérisés en ce qu'on utilise comme composé organique (1) du 1,2,4-trivinylcyclohexane.

5. Copolymères de siloxane présentant des groupements alcényle selon l'une quelconque des revendications 1 à 4, caractérisés en ce qu'on utilise comme polymère de α,ω-dialcénylsiloxane (4) un polymère de formule générale

$$R^4{}_aR_{3-a}SiO(R_2Si\text{-}R^1\text{-}SiR_2O)_m\ (R_2SiO)_kSiR^4{}_aR_{3-a}$$

R ayant la signification susmentionnée,
$R^1$ étant un radical alkylène comprenant 2 à 10 atomes de carbone par radical ou un radical silane ou siloxane divalent,
$R^4$ étant un radical oléfiniquement insaturé en position terminale comprenant 2 à 10 atomes de carbone et
a étant identique ou différent, 0 ou 1, en moyenne 0,7 jusqu'à 1,0,
m étant égal à 0 ou à un nombre entier de 1 à 10,
k étant égal à 0 ou à un nombre entier de 1 à 1 000.

**6.** Copolymères de siloxane présentant des groupements alcényle selon l'une quelconque des revendications 1 à 5, caractérisés en ce qu'on utilise comme polymère de $\alpha,\omega$-dialcénylsiloxane (4) des $\alpha,\omega$-divinylpolydiméthylsiloxanes.

**7.** Copolymères de siloxane présentant des groupements alcényle selon l'une quelconque des revendications 1 à 6, caractérisés en ce qu'on équilibre dans une troisième étape avec un organopolysiloxane (5), de préférence avec un organopolysiloxane linéaire présentant des groupements triorganosiloxy en position terminale de formule générale

$$R_3SiO(SiR_2O)_rSiR_3,$$

R signifiant des radicaux hydrocarbonés identiques ou différents, le cas échéant halogénés, comprenant 1 à 6 atomes de carbone par radical et
r signifiant 0 ou un nombre entier d'une valeur de 1 à 1 500, de préférence de 10 à 300.

**8.** Procédé pour la préparation des copolymères de siloxane présentant des groupements alcényle selon l'une quelconque des revendications 1 à 7, caractérisé en ce qu'on transforme, dans une première étape, un composé (1) présentant au moins trois doubles liaisons aliphatiques de formule générale

$$R^2(CR^3{=}CH_2)_x$$

$R^2$ signifiant un radical hydrocarboné trivalent ou quadrivalent comprenant 1 à 25 atomes de carbone par radical ou un radical silane trivalent ou quadrivalent,
$R^3$ signifiant un atome d'hydrogène ou un radical alkyle comprenant 1 à 6 atomes de carbone par radical, et
x signifiant 3 ou 4,

avec un organosiloxane (2) présentant des atomes d'hydrogène liés par Si en position terminale,
en présence d'un catalyseur (3) favorisant la fixation d'hydrogène lié par Si sur une double liaison aliphatique,
le rapport utilisé d'hydrogène lié par Si dans l'organosiloxane (2) à double liaison aliphatique dans le composé organique (1) étant de 1,3 à 10,
en ce qu'on transforme, dans une deuxième étape, les copolymères d'hydrocarbure et de siloxane présentant des atomes d'hydrogène liés par Si ainsi obtenus avec un polymère de $\alpha,\omega$-dialcénylsiloxane (4) en présence d'un catalyseur (3) favorisant la fixation d'hydrogène lié par Si sur une double liaison aliphatique,
le rapport utilisé de double liaison aliphatique dans le polymère de $\alpha,\omega$-dialcénylsiloxane (4) à hydrogène lié par Si dans le copolymère d'hydrocarbure et de siloxane étant de 1,2 à 10,
et en ce qu'on équilibre, le cas échéant, dans une troisième étape les copolymères de siloxane présentant des groupements alcényle ainsi obtenus avec un organopolysiloxane (5) choisi parmi le groupe constitué d'organopolysiloxanes linéaires présentant des groupements triorganosiloxy en position terminale, d'organopolysiloxanes linéaires présentant des groupements hydroxyle en position terminale, d'organopolysiloxanes ramifiés présentant le cas échéant des groupements hydroxyle, d'organopolysiloxanes cycliques et de copolymères constitués d'unités diorganosiloxane et monoorganosiloxane.

**9.** Procédé selon la revendication 8, caractérisé en ce que le procédé est réalisé dans un solvant organique.

**10.** Compositions réticulables contenant

(A) des copolymères de siloxane présentant des groupements alcényle selon l'une quelconque des revendications 1 à 7,
(B) des organopolysiloxanes présentant au moins 2 atomes d'hydrogène liés par Si,
(C) des catalyseurs favorisant la fixation d'hydrogène lié par Si sur une double liaison aliphatique.

**11.** Compositions réticulables selon la revendication 10, caractérisées en ce que
(D) des inhibiteurs sont contenus.

**12.** Compositions réticulables selon les revendications 10 ou 11, caractérisées en ce que
(E) du solvant est contenu.

**13.** Utilisation des compositions selon l'une ou plusieurs des revendications 10 à 12 pour la préparation de couches repoussant des substances adhésives.

**14.** Copolymères de siloxane présentant des atomes d'hydrogène liés par Si, pouvant être préparés en transformant un composé organique (1) présentant au moins trois doubles liaisons aliphatiques de formule générale

$$R^2(CR^3{=}CH_2)_x$$

$R^2$ signifiant un radical hydrocarboné trivalent ou quadrivalent comprenant 1 à 25 atomes de carbone par radical ou un radical silane trivalent ou quadrivalent,
$R^3$ signifiant un atome d'hydrogène ou un radical alkyle comprenant 1 à 6 atomes de carbone par radical, et
x signifiant 3 ou 4,

avec un organosiloxane (2) présentant des atomes d'hydrogène liés par Si en position terminale, en présence d'un catalyseur (3) favorisant la fixation d'hydrogène lié par Si sur une double liaison aliphatique,

le rapport utilisé d'hydrogène lié par Si dans l'organosiloxane (2) à double liaison aliphatique dans le composé organique (1) étant de 1,3 à 10.

**15.** Copolymères de siloxane présentant des atomes d'hydrogène liés par Si selon la revendication 14, caractérisés en ce qu'on utilise comme organopolysiloxane (2) un organopolysiloxane de formule générale

$$HR_2SiO(SiR_2O)_nSiR_2H$$

R signifiant des radicaux hydrocarbonés identiques ou différents, le cas échéant halogénés, comprenant 1 à 6 atomes de carbone par radical et
n signifiant un nombre entier de 6 à 2 000.

**16.** Copolymères de siloxane présentant des atomes d'hydrogène liés par Si, pouvant être préparés en transformant, dans une première étape, un composé organique (1) présentant au moins trois doubles liaisons aliphatiques de formule générale

$$R^2(CR^3{=}CH_2)_x$$

R2 signifiant un radical hydrocarboné trivalent ou quadrivalent comprenant 1 à 25 atomes de carbone par radical ou un radical silane trivalent ou quadrivalent,
R3 signifiant un atome d'hydrogène ou un radical alkyle comprenant 1 à 6 atomes de carbone par radical et,
x signifiant 3 ou 4,

avec un organosiloxane (2) présentant des atomes d'hydrogène liés par Si en position terminale,

en présence d'un catalyseur (3) favorisant la fixation d'hydrogène lié par Si sur une double liaison aliphatique,

le rapport utilisé d'hydrogène lié par Si dans l'organosiloxane (2) à double liaison aliphatique dans le composé organique (1) étant de 1,3 à 10,

et en équilibrant dans une deuxième étape les copolymères de siloxane présentant des atomes d'hydrogène liés par Si ainsi obtenus avec un organopolysiloxane (5) choisi parmi le groupe constitué d'organopolysiloxanes

linéaires présentant des groupements triorganosiloxy en position terminale, d'organopolysiloxanes linéaires présentant des groupements hydroxyle en position terminale, d'organopolysiloxanes ramifiés présentant le cas échéant des groupements hydroxyle, d'organopolysiloxanes cycliques et de copolymères constitués d'unités diorganosiloxane et monoorganosiloxane.

**17.** Procédé pour la préparation des copolymères de siloxane présentant des groupements alcényle selon l'une quelconque des revendications 1 à 7, caractérisé en ce qu'on transforme, dans une première étape, un composé organique (1) présentant au moins trois doubles liaisons aliphatiques de formule générale

$$R^2(CR^3{=}CH_2)_x$$

$R^2$ signifiant un radical hydrocarboné trivalent ou quadrivalent comprenant 1 à 25 atomes de carbone par radical ou un radical silane trivalent ou quadrivalent,
$R^3$ signifiant un atome d'hydrogène ou un radical alkyle comprenant 1 à 6 atomes de carbone par radical et,
x signifiant 3 ou 4,

avec un organosiloxane (2) présentant des atomes d'hydrogène liés par Si en position terminale,

en présence d'un catalyseur (3) favorisant la fixation d'hydrogène lié par Si sur une double liaison aliphatique,

le rapport utilisé d'hydrogène lié par Si dans l'organosiloxane (2) à double liaison aliphatique dans le composé organique (1) étant de 1,3 à 10,

et en ce qu'on équilibre dans une deuxième étape les copolymères de siloxane présentant des atomes d'hydrogène liés par Si ainsi obtenus avec un organopolysiloxane (5) choisi parmi le groupe constitué d'organopolysiloxanes linéaires présentant des groupements triorganosiloxy en position terminale, d'organopolysiloxanes linéaires présentant des groupements hydroxyle en position terminale, d'organopolysiloxanes ramifiés présentant le cas échéant des groupements hydroxyle, d'organopolysiloxanes cycliques et de copolymères constitués d'unités diorganosiloxane et monoorganosiloxane,

et en ce qu'on transforme dans une troisième étape les copolymères d'hydrocarbure et de siloxane présentant des atomes d'hydrogène liés par Si ainsi obtenus avec un polymère de $\alpha,\omega$-dialcénylsiloxane (4) en présence d'un catalyseur (3) favorisant la fixation d'hydrogène lié par Si sur une double liaison aliphatique,

le rapport utilisé de double liaison aliphatique dans le polymère de $\alpha,\omega$-dialcénylsiloxane (4) à hydrogène lié par Si dans le copolymère d'hydrocarbure et de siloxane étant de 1,2 à 10.